# EUROPEAN PATENT APPLICATION

(11) **EP 4 610 298 A1**
(43) Date of publication of application: **03.09.2025**
(21) Application number: 24160553.4
(22) Date of filing: 29.02.2024
(51) Int. Cl.: C08J 5/24, B32B 5/26, C08G 16/02, C08K 3/04, C08K 7/14, C08L 61/00, H01M 50/229, B32B 5/08, B32B 5/10, B32B 7/027

(54) **HEAT AND FIRE SHIELDING THERMOSET COMPOSITE**

(71) Applicant: Mitsubishi Chemical Advanced Materials GmbH, 48691 Vreden (DE)
(72) Inventor: LICHTBLAU, Leonard, 48691 Vreden (DE); ANDERSON, Sarah, 48691 Vreden (DE); JOHÄNNING, Frank, 48691 Vreden (DE); VIETZE, Simone, 48691 Vreden (DE); REMP, Marcel, 48691 Vreden (DE)
(74) Representative: V.O.

(57) **Abstract**

Use of a composite as a heat and fire shielding material particularly in batteries, wherein the composite comprises at least one layer of a thermoset material, wherein said at least one layer is based on an at least partial consolidation of a mixture of:
a. one or more furan-based resins;
b. one or more catalysts; and
c. one or more reinforcement fibers;
wherein at least 90 wt% of the one or more reinforcement fibers have an average length according to a gaussian normal distribution of at least 6 mm, preferably of at least 10 mm.

## Description

### TECHNICAL FIELD OF THE INVENTION

The present invention relates to a composite, a use of the composite and a method to produce said composite. The composite is particularly applicable for use as a heat and fire shielding material.

### BACKGROUND OF THE INVENTION

Multiple key industries, such as automotive, housing & construction, aerospace, energy, ... concentrate on becoming more environmentally friendly. To help and/or push these industries in this capital intensive transition, several European countries, are forcing legislations to guide the transformation to a greener lifestyle. A key aspect to reach this transition is to transform from a fossil-based economy to a renewable energy based civilization. To succeed, many industries currently using fossil-based fuels are transferring to electrical energy sources such as rechargeable electrical energy storage systems (battery). Batteries may have the advantage to run an equipment on energy that can be provided by renewable energy sources such solar and/or wind power.

As of today, electrical energy sources such as batteries have already entered multiple industries. A typical example can be found in automotive where a propulsion motor may be replaced with a battery. At present, the disadvantage of battery-based vehicles is the limited driving range. An aspect to increase the driving distance is to reduce the weight of the vehicle by, for example, replacing heavy components such as steel for a battery housing with more lightweight materials. Consequently, introducing composite materials into multiple battery applications.

Rechargeable or reloadable batteries or rechargeable electrical energy storage systems comprising a number of single battery cells, such as for example lithium-ion cells, are known and used in several fields of technique, including e.g. as electric power supply of mobile phones and portable computers or electric cars or vehicles or hybrid cars.

It is also known that particularly rechargeable battery cells, such as lithium-ion cells, sometimes undergo internal overheating caused by events such as short circuits within the cell, improper cell use, manufacturing defects or exposure to extreme external temperature. This internal overheating can lead to a so called "thermal runaway" when the reaction rate within the cell caused by the high temperature increases to a point where more heat is generated within the cell than can be withdrawn and the generated heat leads to a further increase of the reaction rate and in turn of the generated heat. In standard lithium-ion (Li-ion) battery configurations, for example, the heat generated within such defective cells can reach 500 to 1000°C, in localized hot spots even more.

In particular, it is essential in such cases to interrupt or at least reduce a heat transfer from defective cells or cell packs to other parts of the storage system or around the storage system, because the heat generated in a defective battery cell or cell pack can spread out to the neighboring cells, which in turn can cause overheat and then undergo thermal runaway. Also it is important to limit the heat transfer to parts around the storage system, which may get destroyed or harmed when treated with the above-mentioned temperatures, causing electrical shortages which in turn could lead to unwanted effects as further cells getting into a thermal runaway.

It is accordingly usual to provide safety precautions for protecting the environment of overheated battery cells or packs of battery cells against the generated heat, including, in particular, not yet affected battery cells or packs but also surrounding construction elements of the system or device or apparatus containing the battery cells.

In order to ensure the overall safety of vehicles equipped with a rechargeable electrical energy storage system (REESS) containing flammable electrolyte, the vehicle occupants should not be exposed to the hazardous environment resulting from a thermal propagation (which is triggered by a single cell thermal runaway due to an internal short circuit). First goal is to suppress thermal propagation completely. If thermal propagation cannot completely be suppressed, it is requested that no external fire or explosion occurs and no smoke enters the passenger cabin within 5 minutes after the warning of a thermal event.

Battery housings in electric vehicles nowadays are mostly made out of steel or aluminum. Steel has fairly good resistance against jet flame and heat but increases the weight of the battery box substantially. Additionally the steel surface can reach very high temperatures during thermal propagation causing fire of the anti-corrosion coating or neighboring polymer parts or even interior carpet. Therefore additional insulation is required. Aluminum shows good mechanical and weight properties but melts quickly when reached directly by thermal propagation flame. Therefore heavy insulation is required and the risk of burn through remains high.

A housing for a rechargeable energy storage system may, for example, be made out of aluminum or an organic polymer sheet molded compound. Both can be damaged as soon as temperatures of 600°C and above are reached. Even steel casings may be at risk in certain situations such as for example a deformation of the casing due to an accident or malfunctioning of an electrical insulation material. There is a risk that heat, and gas gets out of the housing as soon as there is a thermal runaway event within the housing that reaches temperatures that are higher than 600°C. Battery housings based on organic polymers usually only achieve flame resistance by adding flame resistant additives which have a detrimental effect on the mechanical properties.

A further trend is to be noticed, especially in the automotive industry, which is that the rechargeable electrical energy storage systems are getting bigger and bigger and the energy density higher and higher in order to be able to carry more energy, which helps to extend the range a vehicle can drive with a fully charged storage system without recharging the storage system. If such bigger storage systems get defective, the following reactions might also get more intense because of the higher energy stored in those systems. This might lead to higher temperatures.

High energy batteries as those described as 811 (NMC, or nickel-manganese-cobalt ratio) or similar energy density can fail catastrophically if punctured or overheated. When this occurs the ensuing battery fire will not only reach temperatures of 1200°C or above but may also expel shrapnel at moderately high velocities. While battery packs are generally encased in an aluminum shell, aluminum melts at 660°C, so the shell must be protected from the flame and shrapnel of a failed battery to allow occupants of the electrical vehicle to exit in the event of such a failure.

During thermal propagation of a Li-ion battery heat, gas, flames and particles are emitted. The most destructive event during the thermal propagation is the opening of the venting hole, when a jet flame is emitted with velocities of up to Mach 1, temperatures about 1200°C, containing erosive particles and corrosive ingredients.

While some materials exist that can survive a high temperature flame (i.e. greater than 1200°C flame for tens of minutes with no breach), these materials may not be able to withstand the jet flame nor the blast associated with a high energy battery thermal runaway event. Severe risks posed by thermal runaway propagation requires design of the battery module that features jet flame and blast resistant and thermally insulating barriers to mitigate the effects of such a thermal runaway and provide time for vehicle occupants to safely vacate in the event of a fire.

To ensure user safety when utilizing a vehicle, it is anticipated that specifications involving thermal runway events will become more challenging in the near future. Therefore, current standard materials such as aluminum struggle to fulfill the more strict specifications concerning a thermal runway event. An anticipated drawback of aluminum may be that aluminum may most likely not be able to properly contain a flame and/or heat adequately or long enough within a battery housing. Consequently, an aluminum housing may not provide a user sufficient time to leave a vehicle during a dangerous incident such as a thermal runaway event.

Several materials have been investigated to either reduce weight, increase safety and/or reduce cost of multiple materials used in the assembly of a battery. Typical materials applied in a battery are aluminum-based battery housings comprising a battery case (lower lid) and cover case (upper lid), an optional fire resistant sheet, cooling materials, thermal barrier materials, .... Nowadays various companies may develop or possibly market battery housings comprising a combination of a thermoplastic polymer and carbon fibers. Combining a thermoplastic polymer with carbon fibers (such as described in CN 106505170, CN 107331802, US 2013/0252059) may have the advantage of reducing weight of a battery housing compared to steel battery housings while maintaining similar mechanical properties associated with an aluminum battery housing. However, the disadvantage is that such combination struggles to fulfill the more harsh thermal runaway specification such that an additional thermal barrier material may be needed. Therefore, increasing cost, weight and possibly influence recyclability.

Another typical thermal barrier material found in battery applications is a sheet to contain a thermal runway event within one battery cell. Hence, a full thermal runaway event may be avoided. Typical thermal barrier materials found between battery cell have to combine high standards in flame retardancy and thermal management with a specific compression set, such that said thermal barrier may be able to absorb expansion differences between adjacent cells. Hence, minimizing pressure in a manner that damages to adjacent cells may be avoided. Typical materials used to control heat within a cell may be high temperature material like for example mica, silica in combination with compressible materials such as foams or (glass) mineral wool. The compressible materials may adsorb expansion differences associated with the high temperature fluctuations affiliated with the use of batteries. A combination of different materials adversely affects recyclability and the processability of the composite. Additionally, some of these materials may either be known for comprising nanoparticles which potentially could be released in the environment and therefore may possibly cause other health related issues or may possibly induce irritation reactions to the skin.

In view of the above there is still a need for suitable materials and suitable arrangements that help to provide heat and fire shielding and that help to prevent or mitigate damage to adjacent materials and regions from jet flame and blast materials emanating from a malfunctioning battery pack. There is also a need for such suitable material that is easy to use in an assembly process and that provides flexibility with designing a rechargeable electrical energy storage system. Further the material should be lightweight.

As such there is a need for a use of a composite material as a heat and fire shielding material that is capable of withstanding high temperatures and jet flames, contain heat and preferably reduce weight of a component without negatively influencing other mechanical properties.

### SUMMARY

The current invention provides for a use of a composite as a heat shielding and fire shielding material. The heat and fire shielding material being capable of withstanding high temperatures, jet flame as well as impact forces associated with thermal and/or heat applications such as a battery thermal runaway event. The heat and fire shielding material of the present invention helps in case of thermal propagation in batteries to contain the heat, the jet flames and fire emitted from the batteries inside the battery enclosure and away from the vehicle occupants. The time for passenger evacuation in case of a fire is extended. The present invention provides increased safety of electric vehicles. Also in aerospace applications containment of fire is critical (e.g. in passenger planes, Uncrewed Aerial Vehicles (UVA) and drones). The present invention also provides weight savings.

Use of a composite as a heat and fire shielding material according to the invention is described. The heat and fire shielding material is characterized in that the composite comprises at least one layer of a thermoset material. Said at least one layer is based on an at least partial consolidation of a mixture. Said mixture comprises: one or more furan-based resins, one or more catalysts and one or more reinforcement fibers. 90 wt% of the one or more reinforcement fibers have an average length according to a gaussian normal distribution of at least 6 mm, preferably of at least 10 mm, more preferably of at least 20 mm, most preferably of at least 25 mm. Combining such furan-based resins with catalyst(s) and such one or more reinforcement fibers has the advantage of increasing the temperature resistance of the heat and fire shielding material. Additionally, an average length according to a gaussian normal distribution of at least 6 mm further increases the thermal properties and/or may positively influence the mechanical properties of the heat and fire shielding material.

### DESCRIPTION OF EMBODIMENTS

For the purpose of clarity and a concise description, features are described herein as part of the same or separate embodiments, however, it will be appreciated that the scope of the invention may include embodiments having combination of all or some of the features described.

Terminology used for describing particular embodiments is not intended to limit the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

As used herein, the term "heat and fire shielding material" refers to a material capable of containing heat and/or flame propagation within a closed environment for a pro-longed timing, such as minimum 10 seconds, generally between 10 and 20 seconds in case of a jet flame to several minutes or even hours depending on the temperature and intensity of the flame.

As used herein, the term "jet-flame-resistant material", refers to a material showing no breakthrough-hole after exposing a specimen to the following conditions (e.g. a flame emitter test): a pre-screening of a specimen may be performed to see if the specimen may be able to withstand a flame force of approximately 15 N at a temperature of about 1200°C for up to 15 seconds at gas velocities same of higher than 1 Mach. The final target may be aimed at passing the UL 2596 test where 25 cylindrical Li-Ion cells are initiated to a thermal propagation.

As used herein, the term "inherent temperature and/or fire resistant monomer, oligomer or polymer" refers to a monomer, oligomer or polymer having temperature resistant properties without any fire or flame retardant being added. As used in this invention a monomer, oligomer or polymer is considered inherently fire resistant if the monomers, oligomers or polymers may be self-extinguishing, may have a high melting temperature, may be highly fire resistant and/or may be flame resistant. Further, inherent temperature resistant monomers, oligomers and/or polymers refer to a high service temperature and/or good stability for an extended period of time at said service temperature. A high service temperature may refer to 150°C or higher, preferably above 170°C while an extended period of time may refer to at least 1 hour, preferably at least 2 hours.

As used herein, the term "consolidated or consolidation form", refers to a composite after a pressing step is provided. Therefore, consolidated may indicate a state after pressing in a hot condition.

As used herein, the term "unconsolidated form", refers to a state of starting materials in which no substantial formation of a matrix has occurred yet.

As used herein, the term "thermal runaway event", refers to an incident where one exothermal process triggers other processes, finally resulting in an uncontrollable increase in temperature.

The inventions disclosed herein, are related to a use of a composite as a heat and fire shielding material, preferably a jet-flame-resistant material. The heat and fire shielding material may be able to contain heat and/or fire within a closed environment, either for a certain period of time, or contains the heat and/or fire within a closed environment such that an uncontrollable temperature increase may be prevented. Hence, it may be possible to use the composite in more high temperature demanding applications such as envisioned in Li-ion batteries.

The composite for use according to the invention comprises at least one layer of a thermoset material. The at least one layer of thermoset material is based on at least partial consolidation of a mixture of: one or more furan-based resins, one or more catalysts and one or more reinforcement fibers and optional additives.

According to the invention, the reinforcement fibers may comprise inorganic reinforcement fibers, preferably inorganic oxide fibers. Inorganic reinforcement fibers may be known for having a higher melting temperature compared to organic reinforcement fibers. The melting temperature of the reinforcement fibers may be above 400°C, preferably above 500°C, more preferably above 600°C. Also organic fibers may be used as long as the thermal performance may allow such use. A typical example of an organic fiber may comprise aramid fibers.

The reinforcement fibers for use as a heat and fire shielding material according to the invention are preferably of the inorganic type and may be selected from the group consisting of ceramic fibers (e.g. polycrystalline Alumina or Mullite fibers, silica fibers), glass fibers, basalt fibers, alumina earth silicate fibers or any combination thereof. These fibers may have the advantage of increasing the mechanical and thermal properties to a level desired for use as a heat and fire shielding material according to the invention. In particular glass fibers are preferred such as E-glass and especially S-glass.

The reinforcement fibers for use according to the invention are generally used as continuous fibers (preferably as woven fabric or as multi-axial layers consisting out of unidirectional fibers oriented in e.g., 0/45/60/90°), as chopped fibers (in the form of a mat (non-woven structure)) or as a mixture of continuous fibers as fabric and multi-axial fibers or as a mixture of continuous fibers and chopped fibers. Most preferably continuous fibers are used, preferably woven continuous fibers, non-crimp fabrics or unidirectional (UD) layers preferably multiaxially stacked UD layers. Preferably in the case of a mixture of continuous and chopped fibers this is done layer wise, with surface layers containing continuous fibers and core layers containing chopped fibers. Chopped as well as continuous fibers may have the benefit of demonstrating a better performance under severe thermal evaluations such as a UL2596 evaluation. Short fibers, having an average length according to a gaussian normal distribution of below 6 mm do not provide satisfactory results; therefore if short fibers are present in the mixture then they are only present in low amounts generally below 10 wt% of total reinforcement fibers in the mixture.

At least 90wt% of the one or more reinforcement fibers have an average length according to a gaussian normal distribution ≥ 6 mm. Particularly when solely chopped fibers are used it is preferred that they have this minimum average length according to a gaussian normal distribution. Continuous fibers anyway fulfill this requirement. Use of a composite according to the invention, comprising at least 90 wt%, preferably 95 wt%, more preferably 99 wt%, even more preferably 100 wt% of reinforcement fibers with a minimum average length according to a gaussian normal distribution of 6 mm, preferably at least 10 mm, more preferably at least 20 mm, even more preferably at least 25 mm may have the advantage to properly increase the mechanical properties such as impact resistance, tensile strength, bending performance, compression strength, stiffness and/or may increase the thermal properties such as fire resistance, heat management.

According to the present invention, the mixture may comprise a weight percentage of the one or more reinforcement fibers in the range of 15 to 80 wt%, preferably 40 to 65 wt%. A variation in the amount of reinforcement fibers may allow to balance the thermal properties with the mechanical properties. The optimum weight percentage of reinforcement fibers depends on the type of fiber. In case of random orientated chopped fibers, the content generally is up to 40 wt%, preferably 15 to 38 wt%. In case of unidirectional fibers the content generally is up to 70 wt%, preferably 40 to 75 wt%. In case of woven fibers the content is generally up to 80 wt%, preferably 45 to 65 wt%.

The addition of reinforcement fibers to the mixture may have the further advantage of positively affecting the mechanical properties like for example tensile strength, impact force such that they may be similar to the mechanical properties of aluminum. Further, using in particular glass, alumina, silica, ceramic and/or basalt fibers may further boost the thermal properties of the heat and fire shielding material.

In a further embodiment according to the invention, the one or more reinforcement fibers may comprise less than 20 wt%, preferably less than 10 wt%, more preferably less than 5 wt% of carbon fibers. A substantial amount of carbon fibers may possibly have a negative influence on the heat and fire shielding properties. Hence, not fulfilling high demanding thermal specifications like for example encountered in a UL2596.

The furan-based resin for use in the present invention may be a monomer, oligomer, prepolymer or polymer based on furan or furan derivatives, or any mixture thereof. In this respect the term prepolymer refers to a monomer or system of monomers that have been reacted to an intermediate-molecular mass state. This prepolymer is then capable of further polymerization by reactive groups to a fully cured, high-molecular-mass polymer state. Furan-based in this respect means based on furan or a furan derivative whereby furan derivative is to be interpreted as an organic compound derived from furan, a heterocyclic compound with a five-membered aromatic ring, encompassing one oxygen atom and four carbon atoms, with alterations based on various functional groups that may attach to the core furan ring.

Preferably the furan-based resin comprises furan-based monomers and/or furan-based prepolymers.

Furan-based monomers, oligomers and polymers are inherently temperature resistant, meaning on their own without flame retardants added. Temperature resistant means in this respect able to increase ignition resistance and/or reduce flame propagation and/or suppress smoke formation and/or prevent dripping.

According to a preferred embodiment of the invention, the furan-based resin may be bio-based such that the carbon footprint may be positively affected. Most furan-based monomers are derived from furfural, a renewable chemical (by-product from sugar cane processing) which can be produced from hemicellulose fraction of agricultural waste in a steam digestion process. Preferably at least 90 wt% of the furan-based resin for use according to the invention is bio-based. Therefore, the furan-based resin may increase the bio-mass of the composite, offering a greener alternative to existing phenolic and/or epoxy based thermosets.

The furan-based resin may be based on the following furan (derivatives): furfuryl alcohol, furan dimethanol, furoic acid, furan, furandicarboxylic acid, polyethylene 2,5-furandicarboxylate, furan-derived epoxies such as 2,5-bis[(2-oxiranylmethoxy)methyl]-furan (BOF) which can be used with amine hardener such as 5,5'-methylenedifurfurylamine (DFDA) and 5,5'-ethylidenedifurfirylamine (CH3-DFDA), furan (meth)acrylates or any combination thereof. Preferably the thermoset resin is based on furfuryl alcohol. Furfuryl alcohol may have the advantage of increasing the bio-based content. The bio-content of furfuryl alcohol is generally 94 to 98 wt%. Therefore, furfuryl alcohol may reduce the carbon footprint of thermoset composites compared to phenolic and/or epoxy resins. Additionally, furan-based resins positively affect the temperature resistance of the heat and fire shielding material.

Apart from the furan-based resins said at least one layer of thermoset material in the composite may contain up to 10 wt% of other types of thermoset monomers and/or up to 40 wt% of other types of thermoset polymer.

Additionally, the at least one layer of thermoset material comprises one or more catalysts. The one or more catalysts may be provided to increase the reaction mechanism encountered when forming an in-situ network during thermoforming. The one or more catalysts may be in liquid (e.g. amine salt solution and acids) and/or in solid form (e.g. latent catalysts such as melamine modified ammonium polyphosphate or diaminophenylsulfone). Preferably a latent catalyst is present. Preferably, the one or more catalyst may be a liquid catalyst in combination with a latent catalyst. The one or more catalysts may be present in the range of 1 to 30 wt%, preferably 2 to 25 wt%, more preferably in the range of 5 to 15 wt%, based on the total weight of the mixture. Typical catalysts used may be a water-based catalyst in the range of 1 to 5 wt% and/or an ammonium polyphosphate in the range 0 to 30 wt%, based on the total weight of the mixture.

In certain embodiments, the one or more catalysts may co-act as a flame retardant additive in the mixture. Catalysts that may act as catalyst as well as flame retardant will be seen as catalyst in the present invention and not as flame retardant, unless otherwise specified.

In a further embodiment according to the invention, the mixture may further comprise 0-40 wt% of additives, preferably 3-30 wt%. The additives may be selected from the group consisting of bonding agents, flame retardants, hardeners, antistatic agents, pigments, toughening agents, wetting agents, release agents, surface improvers, thickeners, phenolic resins, epoxy resins, vinyl esters, silanes, free acids or any combination thereof. Providing additives in the mixture may have a favorable effect on typical material properties like for example flame retardancy or processing properties but can also help in further improving the heat and fire shielding properties. In that respect a quite substantial amount of flame retardants may be added, in general 3 to 25 wt%. Typical examples of additives may be a free acid in the range of 0.1 to 1.5 wt% and a silane additive in the range of 0.05 to 0.5 wt%, based on the total weight of the mixture.

According to the invention, the composite may further comprise a functional layer such as an electromagnetic interference layer or a structural layer. An electromagnetic interference layer may be added to block unwanted noise associated with an electrical path and/or circuit optionally present in an electrical device. An additional structural layer being based on e.g. carbon fiber can be included as well.

The functional layer may be an electromagnetic interference layer, comprising e.g. polyphenylene sulfide (PPS), polysulfone (PSU), polyether ether ketone (PEEK), polyether ketone-ketone (PEKK), polyether imide (PEI), and carbon fiber reinforcement, randomly respectively as fabric, metallic mesh, aluminum film, steel film, coating, preferably a fire retardant coating. A functional layer may provide the benefit of creating additional properties (not inherently associated with thermosets and/or reinforcement fibers) such as blocking noise originating from electrical circuits or allowing higher thermal distribution to avoid concentrate spot heating.

The total composite may have an area weight in the range of 0.1 kg/m² to 15 kg/m², preferably in the range 1 kg/m² to 15 kg/m², more preferably in the range of 1.5 kg/m² to 10 kg/m² depending on the application of the heat and fire shielding material. Single thermoset layers in the composite may have an area weight of 0.1 to 2 kg/m2. For example the composite may contain face layers of fabric (woven) layers, continuous layers (unidirectional laid in defined orientations e.g. 0/45/60/90° or 0/90 or +45/-45, +60/-60) having an area weight of 150 to 2000 g/m2 and core layers of chopped fibers (without orientation) of area weight 100 to 5000 g/m2.

According to the invention, the composite may have a thickness in the range of 0.1 mm to 15 mm, preferably in the range of 1 mm to 10 mm, more preferably in the range of 1.5 mm to 6 mm, most preferably 2,5 to 5 mm.

According to the invention, the at least one layer of thermoset material in the composite may be obtained by at least partial consolidation of a prepreg of furan-based resins, catalysts and reinforcement fibers. Consolidation is one of the subprocesses occurring during processing of thermoset composites. It is necessary to transform several prepreg layers into a solid laminate.

Use of a composite as a heat and fire shielding material according to the invention is described, e.g. as heat and fire shielding material in energy storage systems such as battery applications. Preferably, the composite may be used in battery applications especially for use in electric vehicles, e-bikes and aerospace industry.

The composite may be configured to act as part of a battery housing. The battery housing may comprise a case body (lower part) and a cover (upper part) removably coupled to said case body. Preferably the composite acts as or is part of the battery cover. Alternatively the composite may be used as a heat and fire shield between individual battery cells or packs of cells.

In a preferred embodiment according to the invention, the composite is used as a jet-flame-resistant heat and fire shielding material. A jet-flame-resistant material may refer to a possible superior class of thermal resistant materials. Hence, indicating an even better heat and fire shielding performance. Whether or not a material is jet-flame-resistant as indicated in the present invention can be tested by standard test UL 2596, Test Method for Thermal and Mechanical Performance of Battery Enclosure Materials which evaluates the performance of battery enclosure materials in a thermal runaway event. Further in order to screen material a simplified "Flame Emitter" test as described above to simulate the jet flame and its kinetic flame energy emitted during thermal propagation in a battery can be used.

In another embodiment of the present invention, a composite is provided that may be suitable to act as a heat and fire shielding material.

The present invention also provides a method of manufacturing a composite.

The method of manufacturing the composite generally comprises the steps of:
a) preparing a thermoset prepreg by impregnating a furan-based resin, catalyst(s) and optional additives with a reinforcement material,
b) forming the composite by exposing the prepreg to a pre-determined pressure, temperature and/or time wherein the pressure may be in the range of 1 to 50 bar, the temperature may be in the range of 80 to 200°C, and the pressing time may be in the range 3 to 120 minutes. Preferably a temperature of 140°C for 30-45 minutes is applied.

The impregnation generally involves wetting and/or soaking the reinforcement fibers in the mixture of furan-based resin, catalyst and optional additives. Typical impregnation processes are a hot melt process (whereby the resin is heat-pressed through the reinforcement material) or a solvent process (whereby the reinforcement material is passed through a resin bath). The reinforcement fibers are wetted with the furan-based resin, catalyst and optional additives. All these processes are well-known in the art of composite manufacturing.

The thermoset prepreg can be processed with any of the commonly known methods such as prepreg hot compression molding, autoclave curing, vacuum bagging. The temperature range and processing time can vary widely.

Suitable composites for use according to the invention are described. A furan based prepreg layer can be combined e.g. with an epoxy layer in one press cycle to improve the mechanical values of the end part. It is also possible to combine a furan-based prepreg layer with a phenolic prepreg, a KyronTex^{®} layer (as described in e.g. WO 2006/111037, US 2015/0044438, US 2015/0030804, US 2021/0197519, WO 2019/068939, WO 2020/074677, WO 2020/074678, WO 2021/052988) or a thermoplast layer. Depending on which thermoplast resin the furan-based prepreg layer is combined with, one press cycle can be used or the thermoplast has to be formed first.

The invention is further described by specific examples.

### EXAMPLE 1

A formulation containing 100 parts of an epoxy resin with an epoxy equivalent around 325 g/equiv., 17 parts of a curing agent with an amine equivalent of 50 g/equiv. and 6 parts of a catalyst and 30 parts of an aluminum trihydrate as flame retardant was prepared by mixing with a dissolver.

### EXAMPLES 2, 3 and 4

A formulation containing 100 parts of a furan-based resin (prepolymer based on furfuryl alcohol), 28 parts of an ammonium polyphosphate, 4 parts of a water diluted ammonium salt and one part of an amino methyl phosphonic acid was prepared.

The prepreg manufacture for all examples was similar and equivalent to a Hot-melt process. A defined resin film was transported to a paper, then the fabric (as listed in Table 1 below) was placed on top of the resin film. The resin was pressed through the fabric with two Calendar rolls at 120°C to 150°C. The prepreg was cooled down to room temperature and was wounded up. The prepreg was stored at - 18°C until further use.

Before pressing, the prepreg was defrosted until room temperature, then cut and stacked with the mentioned layup.

A standard pressing cycle of between 120°C and 140°C with a heating rate of 2°C/min and a holding time at 120°C - 140°C for 60 min was used. The pressure is dependent on the resin flow. For the epoxy resin (example 1) a pressure of 3,5 bars was needed. For the carbon fiber fabric with the furan-based resin a pressure of 10 bars was needed to get a smooth surface. The glass fabric with the furan-based resin was pressed with 3,5 bars and 4 bars. For Examples 1, 2 and 3 a press cycle with a heating up ramp and a cooling phase after pressing was used. There was also a difference in the press cycle between examples 3 and 4. Example 4 was pressed with a common Hot-in-hot-out cycle. The laminate was placed in the oven at 135°C without a heating rate. Then the press was closed with 1 bar and after 5 minutes the pressure reached 4 bars. After 60 min the laminate was taken out without cooling at 135°C.

The various samples were subjected to the Flame Emitter test; the results are presented in Table 1 below.

These results show that example 1 and 2 did not pass the flame emitter test. The laminates had a hole after testing. Examples 3 and 4 did pass the test, there was no hole after the flame emitter test in the laminate.

**Table 1**

| | **Example 1** | **Example 2** | **Example 3** | **Example 4** |
|---|---|---|---|---|
| **Resin** | Flame retardant Epoxy resin | Furan-based resin | Furan-based resin | Furan-based resin |
| **Reinforcement** | E-Glass fabric | Carbon fabric | E-Glass fabric | S-Glass fabric |
| **Fiber Orientation** | woven satin | Twill 2/2 | woven satin | woven satin |
| **Sample Thickness [mm]** | 3 | 3 | 3 | 2 |
| **Single Layer Areal Weight [g/m²]** | 510 | 345 | 510 | 510 |
| **Number of layers** | 12 | 15 | 12 | 8 |
| **Fiber Content [wt-%]** | 62 | 58 | 58 | 58 |
| **Press cycle** | 140°C, 2 °C/min, 3,5 bar, 60 min | 130 °C, 2 °C/min, 10 bar, 60 min | 130 °C, 2 °C/min, 3,5 bar, 60 min | 135 °C, 5 min dwell with 1 bar, 4 bar, 60 min |
| **Flame emitter test** | Not pass, the laminate has broken through | Not pass, the laminate has broken through | Pass, the laminate has not broken through | Pass, the laminate has not broken through |

## Claims

1. Use of a composite as a heat and fire shielding material, **characterized in that** the composite comprises at least one layer of a thermoset material, wherein said at least one layer is based on an at least partial consolidation of a mixture of:
a. one or more furan-based resins; and
b. one or more catalysts; and
c. one or more reinforcement fibers;
wherein at least 90 wt% of the one or more reinforcement fibers have an average length according to a gaussian normal distribution of at least 6 mm, preferably of at least 10 mm, more preferably of at least 20 mm.

2. Use according to claim 1, wherein the reinforcement fibers are inorganic fibers, preferably inorganic oxide fibers.

3. Use according to claim 1 or claim 2, wherein the weight percentage of the one or more reinforcement fibers in the mixture is in the range of 15 to 80 wt%, preferably 40 to 65 wt%,

4. Use according to any one of the preceding claims, wherein the one or more reinforcement fibers comprises continuous fibers and/or chopped fibers, preferably the continuous fibers are woven or multi axial fabrics (non.crimp fabrics).

5. Use according to any one of the preceding claims, wherein the one or more reinforcement fiber is selected from the group consisting of glass fibers, alumina fibers, silica fibers, basalt fibers, mullite fibers, aluminate earth silica fibers and/or ceramic fibers.

6. Use according to any one of the preceding claims wherein less than 20 wt%, preferably less than 10 wt% of the one or more reinforcement fibers in the mixture comprises carbon fibers.

7. Use according to any of the preceding claims, wherein the composite is a jet-flame-resistant material.

8. Use according to any one of the preceding claims wherein the mixture further comprises 0-40 wt% of additives, wherein the additives are selected from the group consisting of bonding agent, flame retardants, antistatic agents, toughening agents, silanes, free acids, hardeners, wetting agents, release agents, surface improvers, thickeners and pigments.

9. Use according to any one of the preceding claims, wherein the furan-based resins comprises at least 90 wt% of bio-based furan-based resins.

10. Use according to any one of the preceding claims wherein the furan-based resin comprises monomers and/or prepolymers based on furfuryl alcohol.

11. Use according to any one of the preceding claims wherein the weight percentage of the one or more catalysts in the mixture is in the range of 2 to 25 wt%, preferably 5 to 15 wt%.

12. Use according to any one of the preceding claims wherein the one or more catalysts comprises a latent catalyst such as melamine modified ammonium polyphosphate.

13. Use according to any of the preceding claims, wherein the composite further comprises layers selected from the group consisting of an electromagnetic interference layer, a structural layer.

14. Use according to any one of the preceding claims, wherein the composite has an area weight in the range of 0.1 kg/m² to 15 preferably in the range of 1 kg/m² to 15 more preferably in the range of 1.5 kg/m² to 10 kg/m².

15. Use according to any one of the preceding claims wherein the composite comprises several layers of such thermoset material, either derived from the same or different furan-based resin, the same or different catalyst and/or the same or different reinforcement fibers, all in the same or different amounts.

16. Use according to claim 15 wherein the composite contains (a) face layer(s) comprising continuous reinforcement fibers and (a) core layer(s) containing chopped fibers.

17. Use according to any of the preceding claims in electrical energy storage applications such as batteries.

18. Use according to claim 17, wherein the composite is configured to act as part of a battery housing, the battery housing comprising a case body and a cover removably coupled to said case body.

19. Use according to claim 18 wherein the composite acts as the battery cover.

20. A composite as defined in any one of the preceding claims, suitable to act as a heat and fire shielding material.

21. A method of manufacturing a composite as defined in claim 20 wherein the at least one layer of thermoset material in the composite is obtained by at least partial consolidation of a prepreg of furan-based resins, catalysts and reinforcement fibers.

22. A method according to claim 21, the method comprising the steps of:
a) preparing a thermoset prepreg by impregnating a furan-based resin, catalyst(s) and optional additives with a reinforcement material,
b) forming the composite by exposing the thermoset prepreg to a pre-determined pressure, temperature and/or time wherein the pressure may be in the range of 1 to 50 bar, the temperature may be in the range of 80 to 200°C, and the pressing time may be in the range 3 to 120 minutes.
